# FASCICULE DE BREVET EUROPEEN

(11) **EP 3 228 188 B1**
(45) Date de publication et mention de la délivrance du brevet: **19.02.2020**
(21) Numéro de dépôt: 17159641.4
(22) Date de dépôt: 07.03.2017
(51) Int. Cl.: A01K 1/00, B01D 46/00, F24F 3/16, F24F 12/00

(54) **DISPOSITIF DE FILTRATION D'AIR POUR BÂTIMENT D'ÉLEVAGE ÉQUIPÉ D'UN FILTRE À POUSSIÈRES MOBILE, ET INSTALLATION DE VENTILATION METTANT EN OEUVRE UN TEL DISPOSITIF DE FILTRATION**
LUFTFILTRATIONSVORRICHTUNG FÜR EIN TIERHALTUNGSGEBÄUDE MIT EINEM MOBILEN STAUBFILTER UND VENTILATIONSINSTALLATION MIT EINEM SOLCHEN FILTRATIONSVORRICHTUNG
AIR FILTRATION DEVICE FOR AN ANIMAL HUSBANDRY BUILDING PROVIDED WITH A MOBILE DUST FILTER, AND VENTILATION INSTALLATION USING SUCH A FILTRATION DEVICE

(30) Priorité: 06.04.2016 FR 1653005
(43) Date de publication de la demande: 11.10.2017
(73) Titulaire: Lead Leroy Concept, 35530 Noyal Sur Vilaine (FR)
(72) Inventeur: GOBIN, Anthony, 44160 PONTCHATEAU (FR); LE ROY, Nicolas, 35200 RENNES (FR)
(74) Mandataire: Vidon Brevets & Stratégie

(56) Documents cités:
- EP-A1- 1 959 211
- WO-A1-2008/010418
- FR-A1- 2 994 473
- US-A1- 2013 074 460

## Description

### 1. Domaine de l'invention

L'invention concerne le domaine de la conception et de la réalisation des équipements destinés à équiper les bâtiments d'élevage, notamment les bâtiments d'élevage de volailles.

Plus précisément, l'invention se rapporte à un dispositif de filtration de l'air de tels bâtiments, et aux installations de ventilation destinées à équiper de tels bâtiments et qui mettent en œuvre un tel dispositif de filtration.

### 2. Art antérieur

Dans les bâtiments d'élevage, il est essentiel de maîtriser et de réguler de façon précise la température et la qualité de l'air pour une meilleure ambiance du bâtiment et un confort amélioré pour les animaux et l'éleveur.

En effet, une baisse ou hausse excessive de température et/ou une dégradation de la qualité de l'air dans un bâtiment d'élevage peut entraîner une surmortalité des animaux. Ce problème est particulièrement sensible avec les volailles.

Les bâtiments d'élevage comportent généralement des installations de ventilation et de chauffage dont l'objectif est de faire entrer suffisamment d'air frais extérieur à l'intérieur du bâtiment, de façon à maintenir une certaine température et des niveaux acceptables d'humidité, de gaz, de poussière et d'odeurs.

Une bonne ventilation est indispensable pour limiter en particulier la quantité de particules en suspension (appelées poussières par la suite). La ventilation doit permettre l'élimination des poussières qui peuvent provenir, entre autres, de la nourriture, de l'urine, des déjections, des particules de peau, des plumes ou des poils, des matériaux du bâtiment, des insectes et de la litière.

Un taux élevé de poussière est un problème pour l'animal en ce sens qu'il peut provoquer des irritations des voies respiratoires et donc réduire sa résistance aux maladies, et faire office de disséminateur pathogène (Salmonellose, E.coli, ...).

Des troubles sont aussi constatés chez les éleveurs et les personnes qui font du ramassage de volailles. Il est ainsi recommandé à ces personnes de porter un masque respiratoire.

En plus de leur impact sur la santé des travailleurs, ces particules véhiculent des molécules odorantes, sources de nuisance. En France, le tiers des émissions de poussières serait imputable à l'agriculture et à l'élevage.

La ventilation des bâtiments d'élevage de volailles peut être assurée par des brasseurs d'air (ou ventilateurs de brassage) qui aspirent l'air venant du sol pour le propulser latéralement, favorisant une ambiance homogène dans le bâtiment, et des ventilateurs d'extraction (assurant une ventilation dynamique par dépression) d'air vicié de l'intérieur vers l'extérieur du bâtiment.

Toutefois, ces installations de ventilation ne sont pas munies de filtre à poussières.

Par ailleurs, dans les élevages de volailles, l'air frais destiné à remplacer l'air vicié doit être chauffé de sorte que la température soit comprise entre 20 et 35°C selon le type et l'âge des volailles. Pour ce faire, il a été proposé d'utiliser des dispositifs de récupération de chaleur de type air-air. Ces dispositifs permettent d'évacuer l'air vicié chargé de poussières et de renouveler l'air du bâtiment en chauffant de l'air frais extérieur insufflé dans le bâtiment avec de l'air chaud vicié extrait du bâtiment.

Afin d'éviter que les poussières de l'air vicié ne se déposent en trop grandes quantités sur les moyens échangeurs de chaleur et encrassent ceux-ci, certains récupérateurs de chaleur sont dotés de filtres à poussières qui filtrent l'air extrait du bâtiment.

Ces filtres doivent être régulièrement démontés et nettoyés, ou changés, lorsqu'ils sont trop encrassés. Leur démontage et leur nettoyage, ou bien leur changement, implique des temps de maintenance relativement importants. Lorsqu'un bâtiment d'élevage est équipé d'une pluralité de tels dispositifs, ces temps de maintenance se voient multipliés.

Par ailleurs, les filtres augmentent la résistance au passage de l'air et en conséquence la consommation d'électricité des ventilateurs d'extraction d'air équipant l'échangeur.

Le document FR-A1-2 994 473 décrit un dispositif de filtration de l'air d'un local, comprenant :
- un châssis délimitant une enceinte de collecte de l'air filtré, ledit châssis présentant une paroi de fond, au moins une ouverture d'évacuation de l'air filtré, et des faces latérales reliant la paroi de fond à ladite ouverture d'évacuation, au moins une ouverture d'entrée d'air étant ménagée sur au moins une des faces latérales, et
- un filtre à poussières.

### 3. Objectifs de l'invention

Un objectif de la présente invention est de proposer un dispositif de filtration de l'air d'un bâtiment d'élevage équipé d'un filtre à poussières permettant de retenir l'essentiel des poussières présentes dans l'air extrait du bâtiment mais dont le filtre peut être facilement et rapidement nettoyé sans avoir obligatoirement à être démonté.

Un autre objectif de la présente invention est de proposer un tel dispositif de filtration de l'air dont l'opération de nettoyage du filtre nécessite moins de temps que pour les dispositifs de l'art antérieur.

Encore un objectif de la présente invention est de proposer un tel dispositif de filtration de l'air qui soit de structure simple.

Encore un autre objectif de la présente invention est de proposer un tel dispositif de filtration de l'air qui peut être mis en œuvre dans différents types d'installation de ventilation d'un bâtiment d'élevage, et notamment dans un dispositif récupérateur de chaleur.

### 4. Exposé de l'invention

Ces objectifs, ainsi que d'autres qui apparaîtront dans la suite de la présente description, sont atteints grâce à l'invention qui concerne un dispositif de filtration de l'air d'un local, notamment d'un local d'élevage.

Selon l'invention, le dispositif comprend :
- un châssis délimitant une enceinte de collecte de l'air filtré, ledit châssis présentant une paroi de fond, au moins une ouverture d'évacuation de l'air filtré opposée à la paroi de fond, et des faces latérales reliant la paroi de fond à ladite ouverture d'évacuation, au moins une ouverture d'entrée d'air étant ménagée sur au moins une des faces latérales,
- un filtre à poussières s'étendant sur le pourtour du châssis et recouvrant ladite au moins une ouverture d'entrée d'air,
- une buse d'aspiration des poussières retenues par le filtre, ladite buse étant montée fixe sur une des faces latérales du châssis, et
- des moyens motorisés pour assurer un déplacement du filtre à poussières autour des faces latérales du châssis du dispositif de filtration et en regard d'un orifice d'entrée d'air de la buse d'aspiration.

Ainsi, le dispositif de filtration de l'air d'un local selon la présente invention est équipé d'un filtre à poussières qui peut être déplacé autour du châssis du dispositif de filtration en regard d'un dispositif d'aspiration. Ce dispositif d'aspiration permet de détacher les poussières qui ont été retenus par le filtre sans avoir à démonter ce dernier. Les temps de maintenance liés à l'entretien du filtre se trouvent donc considérablement diminués.

L'air d'un local d'élevage peut être débarrassé de ses poussières grâce au dispositif de filtration selon la présente invention et le filtre mobile peut être dépoussiéré en continu ou à intervalles réguliers par le dispositif d'aspiration des poussières.

Ceci permet de maximiser les quantités de poussières captées par le filtre, et d'optimiser l'ambiance du bâtiment et le confort des animaux et de l'éleveur.

Ceci permet en outre de limiter la dissémination des poussières à l'extérieur du bâtiment d'élevage et ainsi de répondre à d'éventuelles contraintes environnementales

Le dispositif de filtration de l'invention présente en outre un encombrement réduit, sa structure rendant les opérations de déplacement du filtre, de nettoyage ou de remplacement de celui-ci aisées. Il n'est plus nécessaire de désolidariser systématiquement le filtre à poussières du reste du dispositif pour l'opération de nettoyage du filtre.

Le dispositif de filtration de l'invention peut équiper plusieurs types d'installation de ventilation d'un bâtiment d'élevage, et notamment un dispositif récupérateur de chaleur.

Les filtres des différentes installations de ventilation équipant un bâtiment d'élevage peuvent ainsi être facilement nettoyés de façon à maximiser les quantités de poussières captées par le filtre.

Selon un aspect particulier de l'invention, la buse d'aspiration est montée sur le châssis par des moyens de solidarisation réversible.

Selon un aspect particulier de l'invention, le filtre à poussières est amovible.

Selon un aspect particulier de l'invention, une portion du filtre à poussières s'étend entre l'orifice d'entrée d'air de la buse d'aspiration et la surface extérieure du châssis.

Selon un aspect particulier de l'invention, le filtre à poussières se présente sous la forme d'une bande.

Selon un aspect particulier de l'invention, l'orifice d'entrée d'air de la buse d'aspiration s'étend sur la largeur de la bande.

Selon un aspect particulier de l'invention, le châssis porte à chacun de ses coins un axe pivotant assurant le guidage et le déplacement du filtre à poussières autour des faces latérales du châssis.

Selon un aspect particulier de l'invention, au moins un desdits axes porte des éléments d'entraînement coopérant avec des lumières ménagées dans ledit filtre à poussières.

Selon un aspect particulier de l'invention, les moyens motorisés agissent sur au moins un des axes pivotants pour assurer un déplacement du filtre à poussières autour des faces latérales du châssis.

L'invention concerne, par ailleurs, une installation de ventilation d'un local, notamment d'un local d'élevage comprenant un dispositif de filtration tel que décrit précédemment.

Selon un aspect particulier de l'invention, ladite installation comprend en outre des moyens de circulation forcée de l'air du local vers l'intérieur de l'enceinte à travers le filtre à poussières et les ouvertures d'entrée d'air, puis vers l'intérieur ou l'extérieur du local par ladite au moins une ouverture d'évacuation, lesdits moyens de circulation forcée de l'air coopérant avec ladite ouverture d'évacuation.

Selon un aspect particulier de l'invention, ladite ouverture d'évacuation de l'air filtré du dispositif de filtration est ménagée dans une paroi montée sur le châssis du dispositif de filtration et opposée à la paroi de fond du châssis.

Selon un aspect particulier de l'invention, ladite ouverture d'évacuation de l'air filtré du dispositif de filtration communique avec une prise d'air d'un dispositif récupérateur de chaleur de type air-air.

Selon un aspect particulier de l'invention, les moyens de circulation forcée de l'air sont solidaires du châssis du dispositif de filtration.
Selon un aspect particulier de l'invention, les moyens de circulation forcée de l'air comprennent un ventilateur.

L'invention concerne, par ailleurs, un local d'élevage animal, tel un élevage avicole, équipé d'une installation de ventilation telle que décrite précédemment.

### 5. Liste des figures

L'invention, ainsi que les différents avantages qu'elle présente, seront plus facilement compris, grâce à la description qui va suivre de modes non limitatifs de réalisation de celle-ci donnés en référence aux dessins dans lesquels :
- la figure 1 illustre, dans une vue en perspective, un dispositif de filtration d'air pour bâtiment d'élevage de volailles selon un mode de réalisation de l'invention ;
- les figures 2A et 2B sont des vues en perspective d'un premier type d'installation de ventilation mettant en œuvre un dispositif de filtration d'air conforme à l'invention ;
- la figure 3 est une vue en perspective d'un second type d'installation de ventilation mettant en œuvre un dispositif de filtration d'air conforme à l'invention ;
- les figures 4A à 4D sont différentes vues d'un troisième type d'installation de ventilation mettant en œuvre un dispositif de filtration d'air conforme à l'invention.

### 6. Description

### 6.1 Structure générale du dispositif de filtration d'air

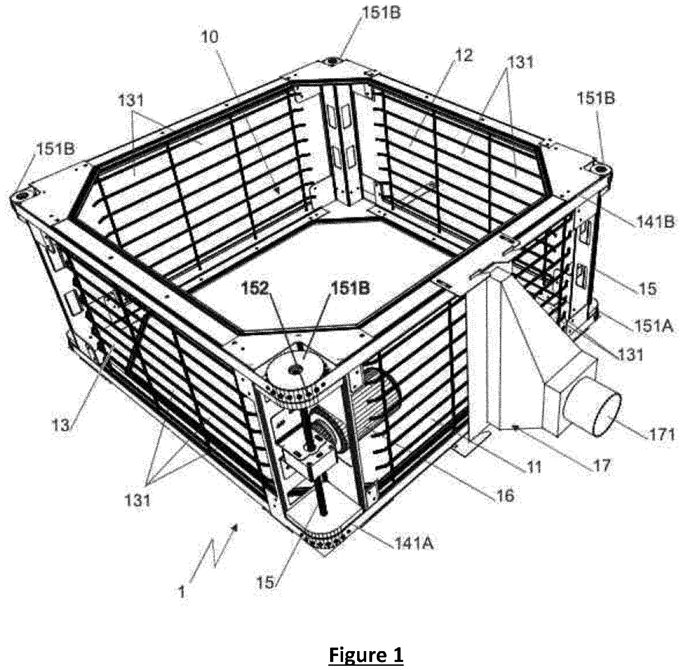

La figure 1 illustre, dans une vue en perspective, un mode de réalisation d'un dispositif de filtration 1 d'air destiné à être mise en œuvre dans une installation de ventilation d'un local, notamment d'un local d'élevage avicole.

Comme on le verra par la suite, ce dispositif de filtration 1 d'air met en œuvre un filtre tournant qui est nettoyé de façon automatique par aspiration, pour atténuer les poussières dans les élevages.

Ce dispositif de filtration 1 comprend un châssis (ou bâti, ou cadre) de section carrée qui délimite une enceinte 10 creuse. Le châssis est constitué d'une paroi de fond 11, d'une face ouverte 12 opposée à la paroi de fond 11 et s'étendant dans un plan parallèle à la paroi de fond 11, et d'une paroi périphérique latérale 13 reliant la paroi de fond 11 à la face ouverte 12.

Dans ce mode de réalisation, la paroi de fond 11 est solidarisée de façon amovible et hermétique au châssis et la paroi périphérique latérale 13 présente sur chacune de ses quatre faces des ouvertures d'entrée d'air 131.

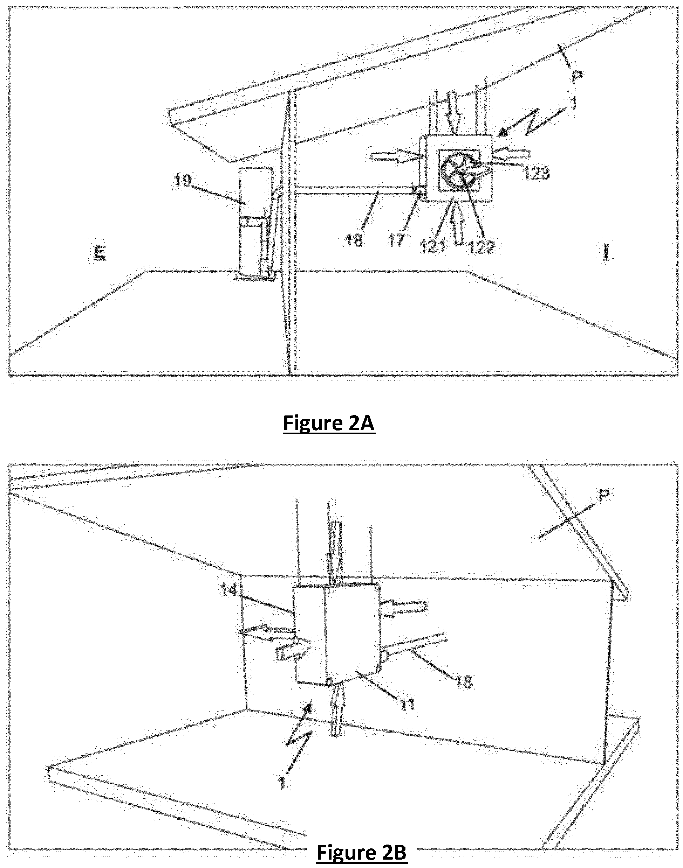

Un filtre à poussières se présentant sous la forme d'une bande de média filtrant 14 s'étend sur le pourtour du châssis (cette bande est visible sur les figures 2B, 3 et 4A notamment), et en particulier autour de la surface extérieure de la paroi périphérique latérale 13 en épousant la forme de cette dernière. La bande de média filtrant 14 recouvre les ouvertures d'entrée d'air 131.

Sur la figure 1, par souci de clarté, seuls les bords 141A, 141B inférieur et supérieur de la bande de média filtrant 14 sont représentés. La largeur de la bande de média filtrant 14 est sensiblement égale à la hauteur de la paroi périphérique latérale 13.

La bande de média filtrant 14 peut être constituée d'une structure synthétique, la rapprochant de la structure d'une moustiquaire, ou bien d'un mélange de microfibres synthétiques (média filtrant de type G4 ou M2, par exemple). Une telle structure permet de conférer à ce filtre légèreté et maniabilité.

Cette bande de média filtrant 14, qui est montée de manière amovible sur le châssis du dispositif de filtration 1 est destinée à être traversé par l'air à filtrer, dit air vicié, du local, et à retenir les poussières contenues dans cet air vicié.

Dans le mode de réalisation illustré sur la figure 1, le dispositif de filtration 1 comprend un ensemble d'entraînement qui est apte à assurer le déplacement de la bande de média filtrant 14 autour de la paroi périphérique latérale 13 du châssis.

L'ensemble d'entraînement comprend un axe 15 pivotant disposé à chacun des coins du châssis du dispositif de filtration 1 et s'étendant parallèlement aux plans de la paroi périphérique latérale 13. Chaque axe 15 porte à ses extrémités une roue 151A, 151B sur laquelle un bord 141A, 141B respectivement de la bande de média filtrant 14 vient en appui.

Ainsi, la bande de média filtrant 14 est maintenue bien tendue autour du châssis.

L'ensemble d'entraînement comprend en outre un moteur 16 commandant le pivotement d'au moins un des axes 15, en l'occurrence de l'axe 15 situé sur le coin inférieur gauche du châssis dans ce mode de réalisation. Les roues 151A, 151B de cet axe inférieur gauche sont munies de picots ou crans 152 qui coopèrent avec des lumières ou perforations ménagées sur chacun des bords 141A, 141B de la bande de média filtrant 14, sur toute la longueur de cette dernière.

L'ensemble d'entraînement assure l'avancement de la nappe ou bande de média filtrant 14 autour de la paroi périphérique latérale 13 et son passage dans une buse 17 d'aspiration de la poussière qui s'est accumulée sur la bande de média filtrant 14.

Cette buse 17 d'aspiration est montée de façon amovible, par encliquetage, sur un côté de la paroi périphérique latérale 13, et chevauche la bande de média filtrant 14. Cette buse 17 présente un orifice d'entrée d'air de section rectangulaire (non visible sur les figures) qui est positionné en regard de la bande de média filtrant 14. La hauteur de l'orifice d'entrée d'air correspond sensiblement à la hauteur de la bande.

La buse 17 d'aspiration est destinée à être raccordée à un tuyau d'un aspirateur par le biais de l'orifice de sortie 171.

Ainsi, la bande de média filtrant 14 peut être nettoyée ou dépoussiérée sans avoir obligatoirement à la démonter. En effet, il suffit de mettre en mouvement la bande de média filtrant 14 autour du châssis pour que la poussière qui s'est agglomérée sur toute la longueur et la largeur de la bande puisse être aspirée par la buse 17 d'aspiration.

Le déplacement de la bande de média filtrant 14 est motorisé. Le moteur 16 peut être reliée à un minuteur permettant son déclenchement automatique, à intervalles de temps réguliers. Le déplacement de la bande de média filtrant 14 peut être mis en œuvre en continu. Le moteur 16 peut être relié à une commande manuelle.

Ceci permet d'éviter que la bande de média filtrant 14 ne s'encrasse trop rapidement et permet de maximiser les quantités de poussières captées par cette dernière. En cas de besoin, la bande de média filtrant 14 peut être démontée aisément du châssis, lavée puis remontée sur le châssis.

Par ailleurs, on note que la surface de la bande de média filtrant 14 qui retient les poussières n'est jamais orientée du côté du circuit d'air propre (c'est-à-dire du circuit d'air filtré) du dispositif de filtration 1, quelle que soit la position de la bande autour du châssis, de sorte à ce que le particules filtrées ne puissent pas passer dans ce circuit d'air propre.

Les quatre faces externes de la bande de média filtrant 14 qui servent à filtrer l'air vicié peuvent être aspirées par la buse 17 d'aspiration.

Cette bande de média filtrant 14 n'est pas encapsulée dans un boîtier et est par conséquent accessible sans nécessiter le démontage de pièces de support, par exemple, autant pour l'entretien (nettoyage du média lavable et réutilisable), que pour la maintenance du dispositif de filtration 1.

Selon l'application choisie, la face ouverte 12 du châssis du dispositif de filtration 1 peut être disposée contre un mur en regard d'une ouverture d'évacuation de section circulaire coopérant avec un ventilateur d'extraction d'air (paragraphes 6.3 et 6.4 ci-dessous), ou bien cette face ouverte 12 peut être obturée partiellement par une paroi amovible dans laquelle est ménagée une ouverture d'évacuation de section circulaire coopérant avec un ventilateur d'extraction d'air (paragraphe 6.2 ci-dessous).

L'ouverture d'évacuation communique avec l'intérieur ou l'extérieur du local.

Lorsque le ventilateur coopérant avec l'ouverture d'évacuation est entraîné en rotation, ce dernier génère un flux d'air permettant le passage de l'air vicié du local, chargé en particules de poussière, à travers la bande de média filtrant 14, les particules se déposant sur la bande. L'air filtré s'engage dans les ouvertures d'entrée d'air 131 et est ensuite collecté dans l'enceinte 10 du dispositif de filtration 1 avant d'être extrait de l'enceinte 10 par l'ouverture d'évacuation pour être rejeté dans le local ou à l'extérieur de celui-ci.

On décrit par la suite plusieurs types d'installation de ventilation mettant en œuvre un dispositif de filtration d'air conforme à l'invention.

### 6.2 Premier type d'installation de ventilation

Sur les figures 2A et 2B, le dispositif de filtration 1 décrit en relation avec la figure 1 est mis en œuvre à l'intérieur I d'un bâtiment d'élevage.

La face ouverte 12 du châssis du dispositif de filtration 1 est obturée partiellement par une paroi 121 amovible dans laquelle est ménagée une ouverture d'évacuation 123 de section circulaire dans laquelle est monté un ventilateur 122 d'extraction de l'air filtré vers l'intérieur I du bâtiment d'élevage. Ce ventilateur 122 est relié à une source d'alimentation en énergie et est, de façon classique, constitué de rotors à pales. Son axe de rotation se confond avec l'axe de l'ouverture d'évacuation 123.

L'ensemble est suspendu au plafond P du bâtiment d'élevage et constitue un brasseur d'air ou un dispositif de recirculation d'air qui déplace et filtre l'air vicié intérieur pour optimiser l'ambiance du bâtiment et le confort des animaux et de l'éleveur. En particulier, un tel dispositif élimine l'air stagnant et la vapeur d'eau (il réduit la condensation sur les surfaces froides en hiver) dans le bâtiment d'élevage, et contribue à la fraicheur en été et à l'assèchement des litières en hiver.

On note que la buse 17 d'aspiration des poussières agglomérées sur la bande de média filtrant 14 est reliée à un conduit 18 en communication avec un aspirateur 19 qui est situé à l'extérieur E du bâtiment. Cet aspirateur 19 comprend un réservoir de stockage des poussières aspirées par la buse 17 d'aspiration. Comme décrit précédemment, la bande de média filtrant 14 peut être déplacée autour du châssis de façon à ce que la buse 17 puisse aspirer les poussières retenues sur toute la largeur et la longueur de la bande.

Des flèches représentent les flux d'air lorsque les pâles du ventilateur 122 sont entraînées en rotation, l'air vicié intérieur pénétrant dans l'enceinte 10 du dispositif de filtration 1 par les quatre faces de la paroi périphérique latérale 13, après avoir traversé la bande de média filtrant 14. L'air filtré qui transite par l'enceinte 10 est ensuite extrait vers l'intérieur I du bâtiment par l'ouverture d'évacuation 123.

On note que la bande de média filtrant 14 n'est pas placée devant l'ouverture d'évacuation 123 et le ventilateur 122 coopérant avec cette dernière, mais autour des ces derniers. L'air vicié traverse la bande de média filtrant 14 dans une direction perpendiculaire à l'axe de l'ouverture d'évacuation 123 et du ventilateur 122.

### 6.3 Deuxième type d'installation de ventilation

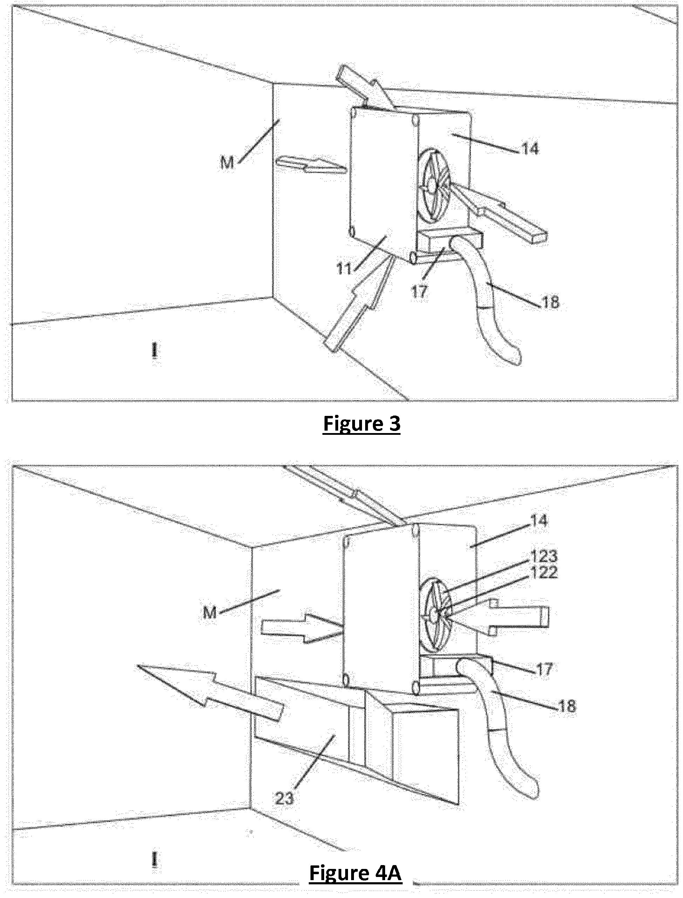

Sur la figure 3, le dispositif de filtration 1 de la figure 1 est mis en œuvre à l'intérieur I d'un bâtiment d'élevage.

La face ouverte 12 du châssis du dispositif de filtration 1 est disposée contre un mur M en regard d'une ouverture d'évacuation 123 de l'air filtré de section circulaire. L'ouverture d'évacuation 123 coopère avec un ventilateur 122 d'extraction de l'air filtré vers l'extérieur E.

L'ensemble permet une ventilation dynamique par dépression de l'air vicié du bâtiment d'élevage et sa filtration par le dispositif 1 avant son rejet vers l'extérieur E du bâtiment d'élevage.

Des flèches représentent les flux d'air lorsque les pâles du ventilateur 122 sont entraînées en rotation, l'air vicié intérieur pénétrant dans l'enceinte 10 du dispositif de filtration 1 par les différentes faces de la paroi périphérique latérale 13, après avoir traversé la bande de média filtrant 14. L'air filtré qui transite par l'enceinte 10 est ensuite extrait vers l'extérieur E du bâtiment par l'ouverture d'évacuation 123.

La buse 17 d'aspiration des poussières du dispositif de filtration 1 est reliée à un conduit 18 en communication avec un aspirateur 19 qui est situé à l'extérieur E du bâtiment.

Ceci permet de traiter l'air évacué du bâtiment d'élevage et d'abaisser les émissions de poussières et les nuisances émises par le bâtiment d'élevage.

### 6.4 Troisième type d'installation de ventilation

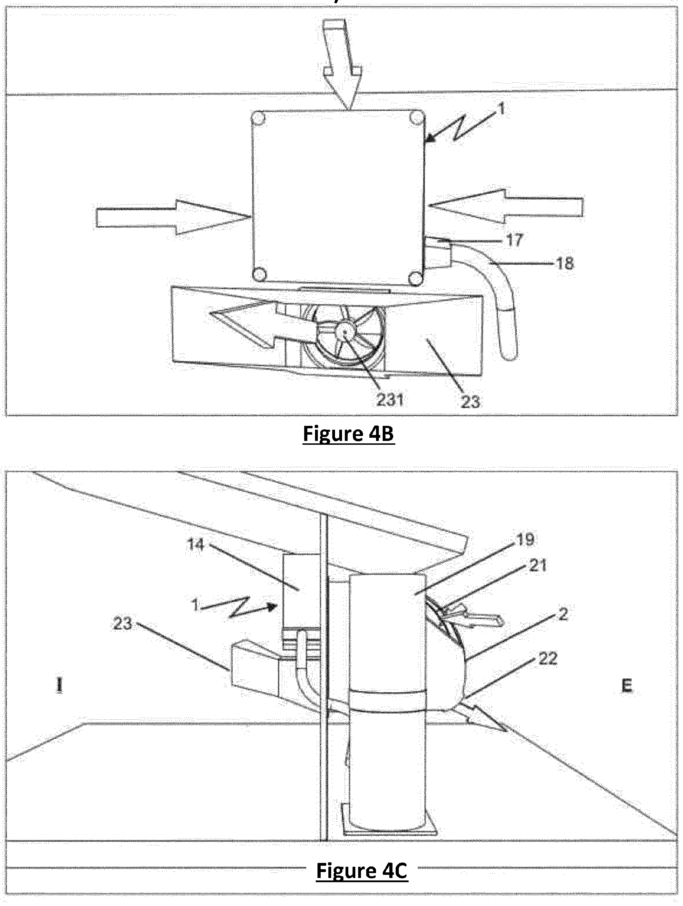

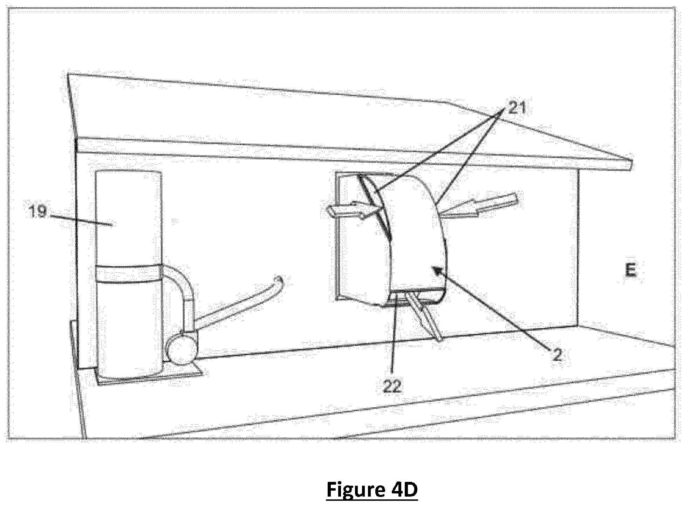

Sur les figures 4A à 4D, le dispositif de filtration 1 de la figure 1 est mis en œuvre à l'intérieur I d'un bâtiment d'élevage.

La face ouverte 12 du châssis de l'unité de filtration 1 est disposée contre un mur M en regard d'une ouverture d'évacuation 123 de l'air filtré de section circulaire. L'ouverture d'évacuation 123 coopère avec un ventilateur 122 d'extraction de l'air filtré vers un dispositif récupérateur de chaleur 2 (ou échangeur de chaleur) de type air-air, dont la partie arrière est placée à l'extérieur E du bâtiment d'élevage et la partie avant à l'intérieur I de celui-ci.

De façon classique, le dispositif récupérateur de chaleur 2 présente sur sa partie arrière une prise d'air extérieur 21 et une sortie d'air refroidi 22, et sur sa partie avant une sortie d'air réchauffé 23 et une prise d'air intérieur constituée par l'ouverture d'évacuation 123 qui coopère avec le ventilateur 122.

La prise d'air intérieur est ainsi équipée de l'unité de filtration 1 qui permet de retenir une partie des poussières présentes dans l'air du bâtiment entrant dans le dispositif récupérateur de chaleur 2.

Ainsi, le dispositif de filtration 1 garantit que de l'air propre, ou du moins quasiment propre, entre dans le dispositif récupérateur de chaleur 2.

Concomitamment, l'actionnement du ventilateur 231 coopérant avec la sortie d'air réchauffé 23 et relié à une source d'alimentation en énergie, autorise l'aspiration par la prise d'air extérieur 21 d'air frais qui pénètre dans le carter du dispositif récupérateur de chaleur 2 avant d'être rejeté par la sortie d'air réchauffé 23 à l'intérieur I du bâtiment. De façon classique, l'air extérieur se réchauffe en captant des calories cédées par l'air filtré provenant du bâtiment et rejeté à l'extérieur de celui-ci.

La buse 17 d'aspiration des poussières du dispositif de filtration 1 est reliée à un conduit 18 en communication avec un aspirateur 19 qui est situé à l'extérieur E du bâtiment.

### 6.5 Autres aspects et variantes

Les ouvertures d'entrée d'air 131 du dispositif de filtration 1 peuvent être réparties sur une ou plusieurs des faces de la paroi périphérique latérale 13 du dispositif de filtration 1.

Le déplacement de la bande de média filtrant 14 peut être déclenché lorsqu'il est déterminé que la quantité de poussières accumulée sur la bande de média filtrant dépasse un seuil prédéterminé.

## Revendications

1. Dispositif de filtration (1) de l'air d'un local, notamment d'un local d'élevage, **caractérisé en ce qu'**il comprend :
- un châssis délimitant une enceinte (10) de collecte de l'air filtré, ledit châssis présentant une paroi de fond (11), au moins une ouverture d'évacuation (12) de l'air filtré opposée à la paroi de fond (11), et des faces latérales (13) reliant la paroi de fond (11) à ladite ouverture d'évacuation (12), au moins une ouverture d'entrée d'air (131) étant ménagée sur au moins une des faces latérales (13),
- un filtre (14) à poussières s'étendant sur le pourtour du châssis et recouvrant ladite au moins une ouverture d'entrée d'air (131),
- une buse d'aspiration (17) des poussières retenues par le filtre (14), ladite buse (17) étant montée fixe sur une des faces latérales (13) du châssis, et
- des moyens motorisés pour assurer un déplacement du filtre (14) à poussières autour des faces latérales (13) du châssis du dispositif de filtration (1) et en regard d'un orifice d'entrée d'air de la buse d'aspiration (17).

2. Dispositif de filtration (1) selon la revendication 1, **caractérisé en ce que** la buse d'aspiration (17) est montée sur le châssis par des moyens de solidarisation réversible.

3. Dispositif de filtration (1) selon la revendication 1 ou 2, **caractérisé en ce que** le filtre à poussières est amovible.

4. Dispositif de filtration (1) selon l'une des revendications 1 à 3, **caractérisé en ce qu'**une portion du filtre (14) à poussières s'étend entre l'orifice d'entrée d'air de la buse d'aspiration (17) et la surface extérieure du châssis.

5. Dispositif de filtration (1) selon l'une des revendications 1 à 4, **caractérisé en ce que** le filtre (14) à poussières se présente sous la forme d'une bande.

6. Dispositif de filtration (1) selon la revendication 5, **caractérisé en ce que** l'orifice d'entrée d'air de la buse d'aspiration (17) s'étend sur la largeur de la bande.

7. Dispositif de filtration (1) selon l'une des revendications 1 à 6, **caractérisé en ce que** le châssis porte à chacun de ses coins un axe (15) pivotant assurant le guidage et le déplacement du filtre (14) à poussières autour des faces latérales (13) du châssis.

8. Dispositif de filtration (1) selon la revendication 7, **caractérisé en ce que** au moins un desdits axes (15) porte des éléments d'entraînement (152) coopérant avec des lumières ménagées dans ledit filtre (14) à poussières.

9. Dispositif de filtration (1) selon la revendication 7 ou 8, **caractérisée en ce que** les moyens motorisés agissent sur au moins un des axes (15) pivotants pour assurer un déplacement du filtre (14) à poussières autour des faces latérales (13) du châssis.

10. Installation de ventilation d'un local, notamment d'un local d'élevage, **caractérisée en ce qu'**elle comprend un dispositif de filtration (1) selon l'une des revendications 1 à 9,
**caractérisée en ce qu'**elle comprend en outre des moyens de circulation forcée (122) de l'air du local vers l'intérieur de l'enceinte (10) à travers le filtre (14) à poussières et les ouvertures d'entrée d'air (131), puis vers l'intérieur ou l'extérieur du local par ladite au moins une ouverture d'évacuation (12), lesdits moyens de circulation forcée (122) de l'air coopérant avec ladite ouverture d'évacuation (12).

11. Installation de ventilation selon la revendication 10, **caractérisée en ce que** ladite ouverture d'évacuation (12) de l'air filtré du dispositif de filtration (1) est ménagée dans une paroi (121) montée sur le châssis du dispositif de filtration (1) et opposée à la paroi de fond (11) du châssis.

12. Installation de ventilation selon la revendication 10 ou 11, **caractérisée en ce que** ladite ouverture d'évacuation (12) de l'air filtré du dispositif de filtration (1) communique avec une prise d'air d'un dispositif récupérateur de chaleur (2) de type air-air.

13. Installation de ventilation selon l'une des revendications 10 à 12, **caractérisée en ce que** les moyens de circulation forcée (122) de l'air sont solidaires du châssis du dispositif de filtration (1).

14. Installation de ventilation selon l'une des revendications 10 à 13, **caractérisée en ce que** les moyens de circulation forcée (122) de l'air comprennent un ventilateur.

15. Local d'élevage animal, tel un élevage avicole, équipé d'une installation de ventilation selon l'une des revendications 10 à 14.

## Patentansprüche

1. Vorrichtung zum Filtern (1) der Luft in einem Raum, insbesondere einem Zuchtraum, **dadurch gekennzeichnet, dass** sie aufweist:
- ein Gestell, das eine Kammer (10) zum Sammeln der gefilterten Luft begrenzt, wobei das Gestell eine Bodenwand (11), mindestens eine der Bodenwand (11) gegenüberliegende Austrittsöffnung (12) für die gefilterte Luft, die der, und Seitenflächen (13) aufweist, die die Bodenwand (11) mit der Austrittsöffnung (12) verbinden, wobei mindestens eine Lufteintrittsöffnung (131) an mindestens einer der Seitenflächen (13) ausgebildet ist,
- einen Staubfilter (14), der sich um den Umfang des Gestells erstreckt und die mindestens eine Lufteintrittsöffnung (131) bedeckt,
- eine Düse (17) zum Absaugen von Staub, der vom Filter (14) zurückgehalten wird, wobei die Düse (17) fest an einer der Seitenflächen (13) des Gestells angebracht ist, und
- motorisierte Mittel, um ein Bewegen des Staubfilters (14) um die Seitenflächen (13) des Gestells der Vorrichtung zum Filtern (1) und gegenüber einer Lufteintrittsöffnung der Düse zum Absaugen (17) zu gewährleisten.

2. Filtervorrichtung zum Filtern (1) nach Anspruch 1, **dadurch gekennzeichnet, dass** die Düse (17) zum Absaugen durch Mittel zur reversiblen Verbindung auf dem Gestell montiert ist.

3. Filtervorrichtung zum Filtern (1) nach Anspruch 1 oder 2, **dadurch gekennzeichnet, dass** der Staubfilter abnehmbar ist.

4. Filtervorrichtung zum Filtern (1) nach einem der Ansprüche 1 bis 3, **dadurch gekennzeichnet, dass** sich ein Abschnitt des Staubfilters (14) zwischen der Lufteintrittsöffnung der Düse zum Absaugen (17) und der Außenfläche des Gestells erstreckt.

5. Filtervorrichtung zum Filtern (1) nach einem der Ansprüche 1 bis 4, **dadurch gekennzeichnet, dass** der Staubfilter (14) in der Form eines Bandes vorliegt.

6. Filtervorrichtung zum Filtern (1) nach Anspruch 5, **dadurch gekennzeichnet, dass** sich die Lufteintrittsöffnung der Düse (17) zum Absaugen über die Breite des Bandes erstreckt.

7. Filtervorrichtung zum Filtern (1) nach einem der Ansprüche 1 bis 6, **dadurch gekennzeichnet, dass** das Gestell an jeder seiner Ecken eine Schwenkachse (15) trägt, die das Führen und das Bewegen des Staubfilters (14) um die Seitenflächen (13) des Gestells gewährleistet.

8. Filtervorrichtung zum Filtern (1) nach Anspruch 7, **dadurch gekennzeichnet, dass** mindestens eine der Achsen (15) Antriebselemente (152) trägt, die mit Öffnungen zusammenwirken, die in dem Staubfilter (14) ausgebildet sind.

9. Filtervorrichtung zum Filtern (1) nach Anspruch 7 oder 8, **dadurch gekennzeichnet, dass** die motorisierten Mittel auf mindestens eine der Schwenkachsen (15) einwirken, um das Bewegen des Staubfilters (14) um die Seitenflächen (13) des Gestells zu gewährleisten.

10. Filtervorrichtung eines Raums, insbesondere eines Zuchtraums, **dadurch gekennzeichnet, dass** sie eine Vorrichtung zum Filtern (1) nach einem der Ansprüche 1 bis 9 aufweist,
**dadurch gekennzeichnet, dass** sie ferner Mittel (122) zum Zwangsumlauf der Luft ins Innere der Kammer (10) durch den Staubfilter (14) und die Lufteintrittsöffnungen (131) und dann ins Innere des Raums oder aus dem Raum heraus durch die mindestens eine Austrittsöffnung (12) aufweist, wobei die Mittel (122) zum Zwangsumlauf der Luft mit der Austrittsöffnung (12) zusammenwirken.

11. Filtervorrichtung nach Anspruch 10, **dadurch gekennzeichnet, dass** die Austrittsöffnung (12) für die gefilterte Luft der Filtervorrichtung (1) in einer Wand (121) ausgebildet ist, die an dem Gestell der Filtervorrichtung (1) befestigt ist und der Bodenwand (11) des Gestells gegenüberliegt.

12. Filtervorrichtung nach Anspruch 10 oder 11, **dadurch gekennzeichnet, dass** die Austrittsöffnung (12) der gefilterten Luft der Filtervorrichtung (1) mit einem Lufteinlass einer Vorrichtung (2) zur Wärmerückgewinnung des Typs des Luft-Luft-Wärmetauschers in Verbindung steht.

13. Filtervorrichtung nach einem der Ansprüche 10 bis 12, **dadurch gekennzeichnet, dass** die Mittel (122) zum Zwangsumlauf der Luft mit dem Gestell der Vorrichtung zum Filtern (1) fest verbunden sind.

14. Lüftungsanlage nach einem der Ansprüche 10 bis 13, **dadurch gekennzeichnet, dass** die Mittel (122) zum Zwangsumlauf der Luft ein Gebläse aufweisen.

15. Raum zur Tierzucht, wie beispielsweise Geflügelzucht, der mit einer Lüftungsanlage nach einem der Ansprüche 10 bis 14 ausgestattet ist.

## Claims

1. Device (1) for filtering the air of a room, in particular a rearing room, **characterised in that** it comprises:
- a frame delimiting an enclosure (10) for collecting filtered air, said frame having a bottom wall (11), at least one discharge opening (12) for the filtered air opposite the bottom wall ( 11), and side faces (13) connecting the bottom wall (11) to said discharge opening (12), at least one air intake opening (131) being provided on at least one of the side faces (13);
- a dust filter (14) extending around the periphery of the frame and covering said at least one air intake opening (131);
- a suction nozzle (17) for dust retained by the filter (14), said nozzle (17) being fixedly mounted on one of the side faces (13) of the frame; and
- motorised means for moving the dust filter (14) around the side faces (13) of the frame of the filtration device (1) and facing an air intake orifice of the suction nozzle (17).

2. Filtration device (1) according to claim 1, **characterised in that** the suction nozzle (17) is mounted on the frame by reversible securing means.

3. Filtration device (1) according to claim 1 or 2, **characterised in that** the dust filter is removable.

4. Filtration device (1) according to any one of claims 1 to 3, **characterised in that** a portion of the dust filter (14) extends between the air intake orifice of the suction nozzle (17) and the outer surface of the frame.

5. Filtration device (1) according to any one of claims 1 to 4, **characterised in that** the dust filter (14) is in the form of a strip.

6. Filtration device (1) according to claim 5, **characterised in that** the air intake orifice of the suction nozzle (17) extends over the width of the strip.

7. Filtration device (1) according to any one of claims 1 to 6, **characterised in that** the frame carries at each of its corners a pivoting shaft (15) for guiding and moving the dust filter (14) around the side faces (13) of the frame.

8. Filtration device (1) according to claim 7, **characterised in that** at least one of said shafts (15) carries drive elements (152) cooperating with slots in said dust filter (14).

9. Filtration device (1) according to claim 7 or 8, **characterised in that** the motorised means act on at least one of the pivoting shafts (15) to ensure a displacement of the dust filter (14) around the side faces (13) of the frame.

10. Ventilation system of a room, in particular a rearing room, **characterised in that** it comprises a filtration device (1) according to any one of claims 1 to 9, **characterised in that** it further comprises means for forced circulation (122) of the air from the room towards the interior of the enclosure (10) via the dust filter (14) and the air intake openings (131), then towards the inside or outside of the room through said at least one discharge opening (12), said means for forced circulation (122) of the air cooperating with said discharge opening (12).

11. Ventilation system according to claim 10, **characterised in that** said discharge opening (12) for the filtered air of the filtration device (1) is provided in a wall (121) mounted on the frame of the filtration device (1) and opposite the bottom wall (11) of the frame.

12. Ventilation system according to claim 10 or 11, **characterised in that** said discharge opening (12) of the filtered air of the filtration device (1) communicates with an air intake of a heat recovery device (2) of the air-air type.

13. Ventilation system according to any one of claims 10 to 12, **characterised in that** the forced circulation means (122) for the air are integral with the frame of the filtration device (1).

14. Ventilation system according to any one of claims 10 to 13, **characterised in that** the forced circulation means (122) for the air comprise a fan.

15. Animal rearing room, such as a poultry farm, equipped with a ventilation system according to any one of claims 10 to 14.
